Europäisches Patentamt

(19) European Patent Office

Office européen des brevets

(11) Veröffentlichungsnummer : **0 192 912**
B1

(12) **EUROPÄISCHE PATENTSCHRIFT**

(45) Veröffentlichungstag der Patentschrift :
07.06.89

(51) Int. Cl.⁴ : C 21 B 13/00, C 21 B 13/14

(21) Anmeldenummer : 85730156.8

(22) Anmeldetag : 26.11.85

(54) Verfahren zur Herstellung von Roheisen.

(30) Priorität : 31.01.85 DE 3503493

(43) Veröffentlichungstag der Anmeldung :
03.09.86 Patentblatt 86/36

(45) Bekanntmachung des Hinweises auf die Patenterteilung : 07.06.89 Patentblatt 89/23

(84) Benannte Vertragsstaaten :
DE GB IT LU SE

(56) Entgegenhaltungen :
EP--A-- 0 111 176
DE--A-- 3 345 107
DE--C-- 3 034 539
US--A-- 4 235 425

(73) Patentinhaber : DEUTSCHE VOEST-ALPINE INDUS-
TRIEANLAGENBAU GMBH
Neusser Strasse 111
D-4000 Düsseldorf 1 (DE)

VOEST-ALPINE INDUSTRIEANLAGENBAU GESELLS-
CHAFT M.B.H.
Turmstrasse 44
A-4020 Linz (AT)

(72) Erfinder : Hauk, Rolf, Dr.
Friedrichstrasse 45
D-4000 Düsseldorf 1 (DE)

(74) Vertreter : Pfenning, Meinig & Partner
Mozartstrasse 17
D-8000 München 2 (DE)

EP 0 192 912 B1

## Beschreibung

Die Erfindung betrifft ein Verfahren zur Herstellung von Roheisen nach dem Oberbegriff des Hauptanspruchs.

Ein derartiges Verfahren ist aus der DE-PS 30 34 539 bekannt. Bei diesem wird im Einschmelzvergaser aus der direkt in diesen eingebrachten Kohle und dem eingeblasenen sauerstoffhaltigen Gas die zum Schmelzen des Eisenschwamms erforderliche Wärme und das Reduktionsgas erzeugt, von dem dann ein erster Teilgasstrom nach Abkühlung und Entstaubung in die Reduktionszone des Schachtofens eingeblasen wird. Dieses Verfahren hat jedoch den Nachteil, daß die eingebrachte feuchte und kalte Kohle im Bereich der für diese vorgesehenen Einlaßöffnungen, das heißt im Vergaserkopf eine Abkühlung bewirkt, woraus sich ein unerwünscht hoher Gehalt an $CO_2$ und $H_2O$ im Reduktionsgas ergibt. Dies setzt naturgemäß den Reduktionsgrad des im Schachtofen erhaltenen Eisenschwamms herab. Koks hat normalerweise einen Feuchtigkeitsgehalt von ca. 10 %. Braunkohlen-Hochtemperaturkoks muß vor einem Transport auf einen Feuchtigkeitsgehalt dieser Größe gebracht werden und eine Trocknung vor dem Einbringen in den Einschmelzvergaser ist wegen einer Brandgefahr praktisch nicht möglich. Durch das direkte Einbringen des Kohlenstoffträgers in den Einschmelzvergaser wird somit dessen Wärmebilanz erheblich beeinträchtigt.

Beim bekannten Verfahren wird viel Reduktionsgas benötigt, um eine gute Metallisierung des Eisenschwamms zu erzielen, weil im Reduktionsschacht das verbrauchte Reduktionsgas nicht regeneriert wird.

Die Metallisierung des im Schachtofen erzeugten Eisenschwamms ist auch abhängig von der Reduktionsgastemperatur. Je höher diese Temperatur ist, um so größer ist die Reduktionsgeschwindigkeit des Eisenerzes, und um so mehr ungebrannte Schlackenbildner können dem Schacht zugeführt werden. Jedoch kann bei dem bekannten Verfahren die Temperatur des Reduktionsgases nicht beliebig hoch eingestellt werden, da sonst die Gefahr eines Erweichens und Zusammenbackens der Eisenschwammteilchen besteht.

Hierdurch würde jedoch der Transport des Eisenschwamms im und insbesondere dessen Austragen aus dem Schachtofen erheblich behindert.

Aus der DE-OS 30 26 949 ist ein Verfahren zum Reduzieren von Eisenoxidpartikeln und Erzeugen von geschmolzenem Eisen bekannt, bei dem ein kleiner Anteil Stückkoks zu der Charge an Oxidpellets im Beschickungstrichter zugesetzt werden kann. Diese Zugabe dient dem Zweck, in den Einschmelzvergaser einen Kohlenstoffträger direkt an der Stelle einzuführen, an dem der Schmelzvorgang stattfindet. Dies ist die Stelle, am der die direkt reduzierten Eisenpellets auf den Boden des Einschmelzvergasers auftreffen.

Um nicht eine zusätzliche Beschickungsvorrichtung vorsehen zu müssen, wird der Stückkoks als Kohlenstoffträger zusammen mit den Eisenoxidpellets über den Beschickungstrichter des Reduktionsofens zugeführt. Dabei besteht jedoch das in dieser Druckschrift ausdrücklich verlangte Erfordernis, daß der Koks den Reduktionsofen ohne Reaktion durchläuft.

In der DE-OS 34 37 913 wird ein Verfahren zur Herstellung von Roheisen aus Eisenerz beschrieben, das in einem Reduktionsschachtofen mittels eines heißen Reduktionsgases zu Eisenschwamm reduziert wird, wobei das Reduktionsgas in der Höhe der Bustle-Ebene in den Schachtofen eingeleitet wird. Das an den unterschiedlichen Stellen eingeleitete Reduktionsgas weist zur Erhöhung des Kohlenstoffgehalts des Eisenschwamms unterschiedliche Temperaturen auf.

Es ist daher die Aufgabe der vorliegenden Erfindung, ein Verfahren der anfangs genannten Art derart zu gestalten, daß die Wärmebilanz des Einschmelzvergasers verbessert wird und sich auf den Schacht in der Weise auswirkt, daß die Menge an CO und $H_2$-haltigem Gas und damit die Reduktionsgasmenge gesenkt werden kann. Außerdem soll ein Zusammenbacken der Eisenerz- bzw. Eisenschwammteilchen verhindert werden.

Diese Aufgabe wird erfindungsgemäß bei dem Verfahren gemäß dem Oberbegriff des Anspruchs 1 dadurch gelöst, daß das Verhältnis der Menge des dem Eisenerz zugegebenen Kohlenstoffträgers zur Menge des insgesamt verwendeten Kohlenstoffträgers auf 5 bis 60 % eingestellt wird, und daß durch den zusammen mit dem Eisenerz dem Direktreduktionsschachtofen zugeführten Kohlenstoffträger die durch die Reduktion des Eisenerzes oxidierten Bestandteile des Reduktionsgases im Direktreduktionsschachtofen teilweise wieder reduziert werden.

Gemäß einer vorteilhaften Ausbildung dieses Verfahrens besteht der dem Eisenerz zugeführte Kohlenstoffträger aus Koks, vorzugsweise Braunkohlen-Hochtemperaturkoks, dessen Grobfraktion dem Direktreduktionsschachtofen und dessen Feinfraktion dem Einschmelzvergaser zugeführt werden. Das Verhältnis der Menge des dem Eisenerz zugegebenen Kohlenstoffträgers zur Menge des insgesamt verwendeten Kohlenstoffträgers soll hierbei vorzugsweise 10 bis 30 % betragen. Ein Teil des Abgases des Direktreduktionsschachtofens wird vorteilhaft dem im Einschmelzvergaser erzeugten Gas zu dessen Kühlung zugegeben, wobei insbesondere dieses Gas dem Direktreduktionsschachtofen in der Bustle-Ebene und im Bodenbereich zugeführt und das Abgas des Direktreduktionsschachtofens dem in der Bustle-Ebene und im Bodenbereich zugeführten Gas des Einschmelzvergasers in unterschiedlichen Mengenverhältnissen zur Einstellung unterschiedlicher Temperaturen beigemischt werden. Schließlich können dem Eisenerz im Direktreduktionsschachtofen auch ungebrannte Zuschlagsstoffe und/oder gebrannte Zuschlagsstoffe zu deren Vorwärmung und/oder Trocknung zugegeben werden.

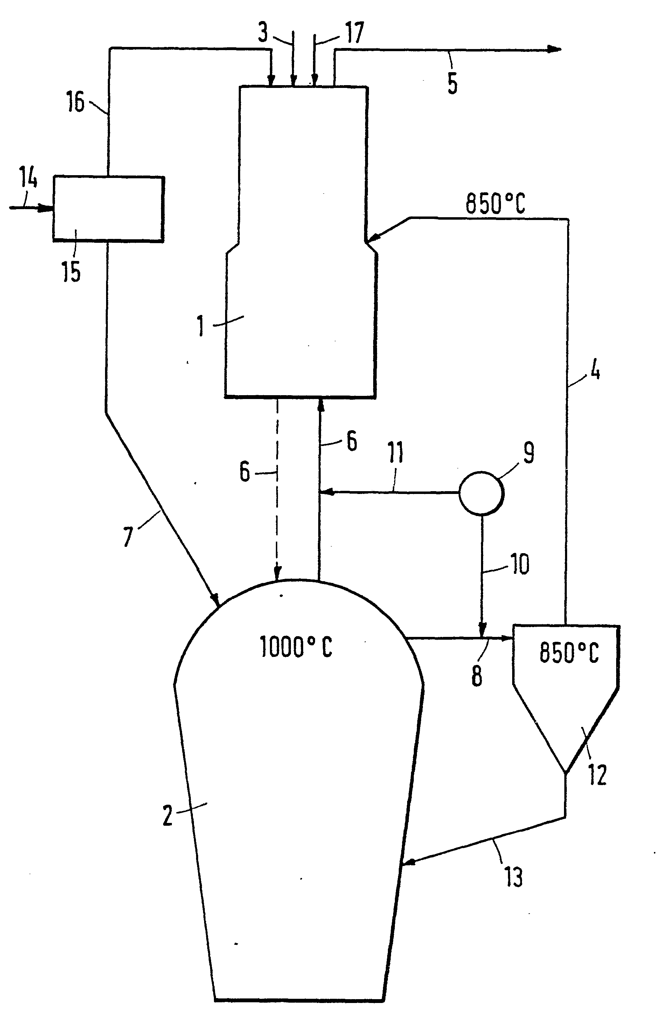

Die Erfindung wird im folgenden anhand eines in der Figur dargestellten Ausführungsbeispieles näher erläutert. Die Figur zeigt in schematischer Darstellung eine Anlage zur Gewinnung von Roheisen aus Eisenerz.

Die gezeigte Anlage besteht im wesentlichen aus einem Direktreduktions-Schachtofen 1 und einem unter diesem befindlichen Einschmelzvergaser 2. Dem Schachtofen 1 wird in bekannter Weise über eine Leitung 3 vorzugsweise stückiges Eisenerz zugeführt. In der Bustle-Ebene wird über eine Leitung 4 Reduktionsgas in den Schachtofen 1 eingeblasen, das entgegen dem Strom des nach unten wandernden Eisenerzes nach oben aufsteigt und die Reduktion des Eisenerzes bewirkt. Nach Durchströmen des Schachtofens 1 wird dieses Gas als Gichtgas über eine Leitung 5 abgeführt.

Über Fallrohre 6 gelangt das zu Eisenschwamm reduzierte Eisenerz in den Einschmelzvergaser 2. Gleichzeitig gelangt über diese Fallrohre 6 im Einschmelzvergaser 2 erzeugtes Reduktionsgas über entsprechende Öffnungen im Bodenbereich des Schachtofens 1 in diesen, wobei es beispielsweise der Abkühlung oder der Aufkohlung des Eisenschwamms dienen kann. Dem Einschmelzvergaser 2 wird in bekannter Weise neben dem Eisenschwamm über eine Leitung 7 ein Kohlenstoffträger in Form von Braunkohlen-Hochtemperaturkoks sowie über eine nichtgezeigte Leitung ein sauerstoffhaltiges Gas zugeführt. Das im Einschmelzvergaser 2 erzeugte, im wesentlichen aus CO und $H_2$ bestehende Reduktionsgas, das eine Temperatur von etwa 1000 °C besitzt, wird in einer Leitung 8 durch Zumischem von Kühlgas auf eine Temperatur von etwa 850 °C abgekühlt. Das Kühlgas stammt aus einer Quelle 9, und wird über eine Leitung 10 zur Leitung 8 befördert. Die Quelle 9 ist weiterhin über eine Leitung 11 mit den Fallrohren 6 verbunden, so daß auch hier das aus dem Einschmelzvergaser 2 durch die Fallrohre 6 aufsteigende Reduktionsgas auf eine gewünschte Temperatur abgekühlt werden kann. Die Quelle 9 wird nach entsprechender Abkühlung und Reinigung von dem über die Leitung 5 abgeführten Gichtgas des Schachtofens 1 gespeist. Das abgekühlte Reduktionsgas gelangt über die Leitung 8 in einen Zyklon 12, in dem es von Staubteilchen 13 befreit wird, die über eine Leitung 13 wieder in den Einschmelzvergaser 2 zurückgeführt werden. Das gereinigte Reduktionsgas, das die gewünschte Temperatur von etwa 850 °C besitzt, gelangt über die Leitung 4 in den Schachtofen 1.

Der Braunkohlen-Hochtemperaturkoks wird zunächst über eine Leitung 14 zu einem Sieb 15 befördert. In den Sieb 15 erfolgt eine Aufteilung des Kokses derart, daß über die Leitung 7 seine Feinfraktion in den Einschmelzvergaser 2 und über eine Leitung 16 seine Grobfraktion oben in den Schachtofen 1 eingegeben wird. Hierbei erfolgt die Trennung in der Weise, daß die Grobfraktion eine Körnung von ca. 10 bis 50 mm aufweist und der Anteil der Grobfraktion an der Gesamtmenge des Kokses etwa 5 bis 60, vorzugsweise 10 bis 30 % beträgt.

Der dem Schachtofen 1 über die Leitung 16 zugeführte Koks wird im Schachtofen vorgewärmt und getrocknet, so daß nur noch der über die Leitung 7 in den Einschmelzvergaser 2 eingebrachte Teil des Kokses feucht und kalt ist. Hierdurch kann die Wärmebilanz des Vergasers erheblich verbessert werden, wodurch auch die Qualität des im Einschmelzvergaser erzeugten Reduktionsgases erhöht wird. Der in den Schachtofen 1 eingebrachte Koks hat weiterhin die Wirkung, daß das durch die Reduktion des Eisenerzes aus dem Reduktionsgas gewonnene $CO_2$ und $H_2O$ teilweise wieder zu CO und $H_2$ umgesetzt wird. Man nähert sich somit im Ergebnis der im Hochofen ablaufenden direkten Reduktion an, bei der aus Eisenoxid und Kohlenstoff Eisen- und Kohlenmonoxid gebildet wird. Demzufolge ist der Bedarf an Reduktionsgas geringer und hat damit insgesamt eine kohle- und sauerstoffeinsparende Wirkung.

Das Zumischen des Kokses zum Eisenerz im Schachtofen 1 führt auch zu einer verringerten Klebeneigung des Eisenschwamms. Daher ist es möglich, mit relativ hohen Temperaturen im Schachtofen 1 zu arbeiten, wodurch sich ein verbesserter Reduktionsgrad ergibt.

Ein hoher Reduktionsgrad Hird auch dann erreicht, wenn das über die Bustle-Ebene in den Schachtofen 1 eingeblasene Reduktionsgas relativ viel $CO_2$ enthält. Dieses wird durch den Koks im Schachtofen teilweise in CO umgesetzt, so daß es an der Reduktion des Eisenerzes mitwirken kann.

Durch die erhöhte Reduktionsgastemperatur und die Möglichkeit, durch den Koks im Schachtofen 1 $CO_2$ zu CO umzusetzen, können weiterhin ungebrannte Zuschlagsstoffe wie Kalkstein oder Dolomit in den Schachtofen eingebracht werden, wo sie vorgewärmt und entsäuert werden können. Hierfür ist eine Leitung 17 vorgesehen, die mit entsprechenden Einlaßöffnungen im oberen Bereich des Schachtofens 1 verbunden ist.

## Patentansprüche

1. Verfahren zur Herstellung von Roheisen aus Eisenerz, das zunächst in einem Direktreduktionsschachtofen mittels eines heißen Reduktionsgases zu Eisenschwamm reduziert und dann der erhaltene Eisenschwamm in einem Einschmelzvergaser unter Zuführung eines Kohlenstoffträgers und eines sauerstoffhaltigen Gases und Bildung zumindest eines Teils des Reduktionsgases eingeschmolzen und dem in den Direktreduktionsschachtofen eingegebenen Eisenerz ebenfalls ein Kohlenstoffträger zugeführt wird, dadurch gekennzeichnet, daß das Verhältnis der Menge des dem Eisenerz zugegebenen Kohlenstoffträgers zur Menge des insgesamt verwendeten Kohlenstoffträgers auf 5 bis 60 % eingestellt wird, und daß durch den zusammen mit dem Eisenerz dem Direktreduktionsschachtofen (1) zugeführten Kohlenstoffträger die durch die Reduktion des Eisenerzes oxidierten Bestandteile des Reduktionsgases im Direktreduktionsschachtofen (1) teilweise wieder reduziert werden.

2. Verfahren nach Anspruch 1, dadurch gekennzeichnet, daß als dem Eisenerz zugeführter Kohlenstoffträger, wie an sich bekannt, Koks verwendet wird.

3. Verfahren nach einem der Ansprüche 1 oder 2, dadurch gekennzeichnet, daß als Kohlenstoffträger Braunkohlen-Hochtemperaturkoks verwendet wird, dessen Grobfraktion dem Direktreduktionsschachtofen (1) und dessen Feinfraktion dem Einschmelzvergaser (2) zugeführt werden.

4. Verfahren nach einem der Ansprüche 1 bis 3, dadurch gekennzeichnet, daß dem Eisenerz Koks in einer Körnung von 10 bis 50 mm zugegeben wird.

5. Verfahren nach einem der Ansprüche 1 bis 4, dadurch gekennzeichnet, daß das Verhältnis der Menge des dem Eisenerz zugegebenen Kohlenstoffträgers zur Menge des insgesamt verwendeten Kohlenstoffträgers auf 10 bis 30 % eingestellt wird.

6. Verfahren nach einem der Ansprüche 1 bis 5, dadurch gekennzeichnet, daß ein Teil des Abgases des Direktreduktionsschachtofens (1) dem im Einschmelzvergaser (2) erzeugten Gas zu dessen Kühlung zugegeben wird.

7. Verfahren nach Anspruch 6, dadurch gekennzeichnet, daß, wie an sich bekannt, das im Einschmelzvergaser (2) erzeugte Gas dem Direktreduktionsschachtofen (1) in der Bustle-Ebene und im Bodenbereich zugführt wird und daß das Abgas des Direktreduktionsschachtofens (1) dem in der Bustle-Ebene und im Bodenbereich zugeführten Gas aus dem Einschmelzvergaser (2) in unterschiedlichen Mengengverhältnissen zur Einstellung unterschiedlicher Temperaturen beigemischt wird.

· 8. Verfahren nach einem der Ansprüche 1 bis 7, dadurch gekennzeichnet, daß dem Eisenerz, wie an sich bekannt, im Direktreduktionsschachtofen (1) ungebrannte Zuschlagsstoffe zugegeben werden.

9. Verfahren nach eimem der Ansprüche 1 bis 8, dadurch gekennzeichnet, daß, wie an sich bekannt, dem Eisenerz gebrannte Zuschlagsstoffe zu deren Vorwärmung und/oder Trocknung zugegeben werden.

## Claims

1. Process for the production of pig iron from iron ore, wherein the iron ore is first reduced to sponge iron in a direct reduction shaft furnace using a hot reduction gas, and then the resulting sponge iron is smelted in a melt-down gasifier, adding a carbon filler and an oxygenic gas, and thereby forming at least part of the reduction gas, and a carbon filler is likewise added to the iron ore introduced into the direct reduction shaft furnace, characterised by fixing at 5 to 60 % the proportion of carbon filler added to the iron ore out of the total quantity of carbon filler used, and by re-reducing some of the components of the reduction gas that have been oxidised by reduction of the iron ore in the direct reduction shaft furnace (1), using the carbon filler that has been added to the direct reduction shaft furnace (1) with the iron ore.

2. Process according to claim 1, characterised by the use of coke, as known per se, as the carbon filler added to the iron ore.

3. Process according to either of claims 1 or 2, characterised by the use of high-temperature lignite coke as the carbon filler, the coarse-grained fraction thereof being added to the direct reduction shaft furnace (1) and the fine-grained fraction thereof to the melt-down gasifier (2).

4. Process according to one of claims 1 to 3, characterised by adding coke in a grain size of 10 to 50 mm to the iron ore.

5. Process according to one of claims 1 to 4, characterised by fixing at 10 to 30 % the proportion of carbon filler added to the iron ore out of the total quantity of carbon filler used.

6. Process according to one of claims 1 to 5, characterised by adding part of the flue gas from the direct reduction shaft furnace (1) to the gas produced in the melt-down gasifier (2) to cool the latter.

7. Process according to claim 6, characterised by, as known per se, adding the gas produced in the melt-down gasifier (2) to the direct reduction shaft furnace (1) at bustle level and in the hearth region and by admixing the flue gas from the direct reduction shaft furnace (1) with the gas from the melt-down gasifier (2) introduced at bustle level and in the hearth region in different proportions to set different temperatures.

8. Process according to one of claims 1 to 7, characterised by adding unburnt flux substances to the iron ore in the direct reduction furnace (1), as known per se.

9. Process according to one of claims 1 to 8, characterised by adding burnt flux substances to the iron ore, as known per se, to pre-heat and/or dry them.

## Revendications

1. Procédé de production de fonte brute à partir de minerai de fer, qui est d'abord réduit dans un four à cuve de réduction directe au moyen d'un gaz réducteur chaud en éponge de fer, puis l'éponge de fer obtenue est fondue dans un gazogène à fusion de cendres avec apport d'un porteur de carbone et d'un gaz contenant de l'oxygène et formation d'au moins une partie du gaz réducteur et un porteur de carbone est également ajouté au minerai de fer introduit dans le four à cuve de réduction directe, caractérisé en ce que le rapport de la quantité du porteur de carbone ajouté au minerai de fer à la quantité du porteur de carbone utilisé au total est ajusté à 5 à 60 % et que les constituants du gaz réducteur oxydés par la réduction du minerai de fer sont réduits à nouveau pour partie dans le four à cuve de réduction directe (1) par le porteur de carbone introduit conjointement avec le minerai de fer dans le four à cuve de réduction directe (1).

2. Procédé suivant la revendication 1, caractérisé en ce qu'on utilise du coke, ainsi qu'il est connu en soi, comme porteur de carbone ajouté au minerai de fer.

3. Procédé suivant la revendication 1 ou 2, caractérisé en ce qu'on utilise comme porteur de carbone du coke de lignite de haute température, dont la fraction grossière est introduite dans le four à cuve de réduction directe (1) et la fraction fine est introduite dans le gazogène à fusion de cendres (2).

4. Procédé suivant l'une quelconque des revendications 1 à 3, caractérisé en ce que du coke d'une granulométrie de 10 à 50 mm est ajouté au minerai de fer.

5. Procédé suivant l'une quelconque des revendications 1 à 4, caractérisé en ce que le rapport de la quantité du porteur de carbone ajouté au minerai de fer à la quantité de porteur de carbone utilisé au total est ajusté à 10 à 30 %.

6. Procédé suivant l'une quelconque des revendications 1 à 5, caractérisé en ce qu'une partie du gaz usé du four à cuve de réduction directe (1) est ajoutée au gaz produit dans le gazogène à fusion de cendres (2) pour son refroidissement.

7. Procédé suivant la revendication 6, caractérisé en ce que, ainsi qu'il est connu en soi, le gaz produit dans le gazogène à fusion de cendres (2) est introduit dans le four à cuve de réduction directe (1) dans le plan du conduit annulaire de vent chaud et dans la région du fond et que le gaz usé du four à cuve de réduction directe (1) est mélangé dans diverses proportions pour l'ajustement de diverses températures au gaz du gazogène à fusion de cendres (2) introduit dans le plan du conduit annulaire de vent chaud et dans la région du fond.

8. Procédé suivant l'une quelconque des revendications 1 à 7, caractérisé en ce que des fondants non calcinés sont ajoutés ainsi qu'il est connu en soi, au minerai de fer dans le four à cuve de réduction directe (1).

9. Procédé suivant l'une quelconque des revendications 1 à 8, caractérisé en ce que, ainsi qu'il est connu en soi, des fondants calcinés sont ajoutés au minerai de fer en vue de leur préchauffage et/ou de leur séchage.